# DEMANDE DE BREVET EUROPEEN

(11) **EP 4 016 298 A1**
(43) Date de publication de la demande: **22.06.2022**
(21) Numéro de dépôt: 21215298.7
(22) Date de dépôt: 16.12.2021
(51) Int. Cl.: G06F 9/48

(54) **CONTRÔLE DU TRAITEMENT DE COMMANDES APDU**

(30) Priorité: 21.12.2020 FR 2013836
(71) Demandeur: IDEMIA France, 92400 Courbevoie (FR)
(72) Inventeur: DOS SANTOS, Elder, 92400 (FR)
(74) Mandataire: Cabinet Beau de Loménie

(57) **Abrégé**

L'invention vise un procédé mis en œuvre par un dispositif électronique (DV1) opérant sous le contrôle d'un terminal (T1), le procédé comprenant : initiation d'un traitement d'une commande APDU (CMD) envoyée par le terminal ; sur détection d'un événement donné, exécution d'un mécanisme de suspension comprenant la suspension du traitement de la commande APDU avant son achèvement et envoi au terminal (T1) d'un message de suspension comprenant un identifiant pour indiquer que le traitement est suspendu ; et après la suspension du traitement, si une commande de reprise d'exécution comportant l'identifiant de la commande APDU est reçue, reprise de l'exécution du traitement de la commande APDU. L'invention permet ainsi de mettre en suspens le traitement d'une commande ADPU (CMD) afin notamment d'exécuter une autre commande APDU si besoin.

## Description

### Domaine Technique

L'invention se situe dans le domaine des dispositifs électroniques traitant des commandes APDU (pour « Application Protocol Data Unit ») et porte plus particulièrement sur le contrôle, par un terminal, d'un dispositif électronique tel qu'une carte à puce par exemple, au moyen de commandes APDU.

### Technique antérieure

L'utilisation des cartes à puce (ou cartes à microcircuit) est aujourd'hui largement répandue dans la vie quotidienne. Les cartes à puce peuvent être conçues pour réaliser divers types de fonctions, notamment pour effectuer des transactions, telles que des transactions bancaires (transaction de paiement, de transfert...), des transactions d'authentification, etc. Ces cartes peuvent par exemple être utilisées comme cartes bancaires, cartes de fidélité, cartes d'accès etc., et peuvent prendre divers formats selon leurs utilisations respectives.

De manière générale, une carte à puce est conçue pour communiquer avec un dispositif externe à cette carte, autrement appelé terminal ou lecteur, pour mettre en œuvre au moins une fonction. Les cartes à puce pour applications bancaires (carte de crédit, carte de débit etc.), par exemple, sont aptes à coopérer avec des terminaux de paiement ou des distributeurs automatiques de billets (DAB) pour réaliser diverses opérations financières.

De façon connue, une carte à puce comprend un corps de carte qui est équipé d'une puce électronique configurée pour traiter des signaux et réaliser diverses fonctions selon l'utilisation souhaitée de la carte. Pour ce faire, une carte à puce est également munie de moyens de communication lui permettant d'interagir avec des terminaux externes.

Pour communiquer avec l'extérieur, une carte à puce respecte un protocole de communication approprié. Ainsi, le protocole ISO 7816 est le protocole de communication utilisé majoritairement par les cartes à puce pour coopérer par contact avec des terminaux externes, par exemple avec des terminaux de paiement lors de transactions de paiement par contact. Le traitement de transactions en sans contact est également de plus en plus fréquemment utilisé (notamment par les cartes bancaires et solutions de paiement mobiles), par exemple en appliquant les protocoles ISO 14443, ETSI 102622 (HCI), ETSI 102613 (SWP) ou NFC/ISO 15693 pour les transactions de paiement.

Les interactions entre une carte à puce et un terminal font généralement intervenir des APDUs ou « Application Protocol Data Unit ». Plus précisément, un terminal contrôle une carte à puce en lui envoyant des commandes (ou requêtes) APDU auxquelles la carte à puce peut répondre par des messages (ou réponses) APDU. En réponse à chaque commande APDU reçue depuis le terminal, la carte à puce réalise un traitement spécifique, envoie au terminal une réponse APDU qui est un message de statut indiquant un résultat ou l'état de la carte à puce, et peut aussi éventuellement envoyer des données de retour au terminal.

La structure d'un APDU est définie dans la norme ISO/IEC 7816-4. Il s'agit d'un format bien connu qui permet de structurer les commandes et messages échangés entre les terminaux et cartes à puce (ou tous autres dispositifs électroniques appropriés). Conformément à la norme précitée, une commande APDU comporte un certain nombre d'octets selon un format prédéfini, bien connu de l'homme du métier.

Ainsi, un terminal peut réaliser des opérations de lecture et/ou d'écriture, invoquer des fonctions cryptographiques, ou déclencher une quelconque autre fonction en envoyant une commande APDU appropriée à une carte à puce. Le fonctionnement d'une carte à puce s'appuie donc généralement sur un paradigme d'appel de procédure, transporté par des APDUs (généralement définies pour un système d'exploitation spécifique).

L'échange des ADPUs entre un terminal et une carte à puce est généralement assuré par une liaison série. Ce type d'interface de communication est limité techniquement en ce que les paquets de données se succèdent, les uns après les autres, sur une seule voie de communication entre le terminal et la carte à puce. Conformément au protocole APDU, une carte à puce et son terminal associé ne peuvent ainsi traiter qu'une seule commande APDU à la fois. Lorsque le terminal envoie une commande APDU, il donne la main à la carte à puce pour traiter cette commande, et se met en attente d'une réponse de la part de la carte à puce. Une fois que le terminal reçoit une réponse de la carte à puce, il peut alors utiliser la liaison série pour envoyer une nouvelle commande APDU. Dans le cas particulier d'une non réponse de la carte à puce dans un délai imparti (pas de message de statut, ni le cas échéant de données retournés par la carte sur la liaison série au terminal), un processus de réinitialisation de la carte à puce (« reset » en anglais), bien connu de l'homme du métier, est déclenché par le terminal. Une fois la carte à puce réinitialisée, le terminal peut ainsi de nouveau envoyer une commande à la carte à puce.

Ainsi, afin d'éviter tous risques de collision sur la ligne série, le terminal ne peut envoyer une nouvelle commande APDU à la carte à puce avant d'avoir reçu une réponse de la carte à puce ou, le cas échéant, avant que le processus de réinitialisation de la carte à puce ne soit finalisé.

Les interactions décrites ci-dessus entre cartes à puce et terminaux présentent donc des limitations techniques, en termes notamment de flexibilité et de réactivité qui résultent en particulier des contraintes techniques imposées par une liaison série, par les capacités limitées des cartes à puce et autres dispositifs de traitement, et par le protocole APDU. L'usage d'une liaison série et de commandes APDU est généralement imposé par le contexte et les contraintes techniques, notamment les ressources limitées de la carte à puce et éventuellement du terminal,

Or, certaines commandes APDU peuvent requérir des traitements relativement longs côté carte à puce, ce qui bloque la ligne série et tous traitements ultérieurs. Les limitations dans les échanges entre terminaux et cartes à puce peuvent donc engendrer des problèmes dans certaines situations, par exemple lorsqu'un traitement particulier doit être réalisé rapidement par la carte à puce.

Il existe donc un besoin pour une solution permettant des échanges d'APDUs plus flexibles et plus efficaces entre un terminal et un dispositif électronique tel qu'une carte à puce par exemple. En particulier, un besoin existe pour permettre à un terminal de contrôler efficacement et de façon flexible une carte à puce (et plus généralement un dispositif électronique quelconque) au moyen de commandes APDU. De même, un besoin existe pour permettre à une carte à puce (et plus généralement un dispositif électronique quelconque) de traiter efficacement et de façon flexible des commandes APDU.

Un besoin existe en particulier pour permettre à un terminal de contrôler plus efficacement une carte à puce (ou plus généralement un dispositif électronique) au travers d'une liaison série, par exemple pour traiter des transactions telles que des transactions de paiement ou autres. Il est notamment souhaitable de permette un tel contrôle tout en respectant le protocole ADPU tel que défini dans le standard ISO 7816.

### Exposé de l'invention

A cet effet, la présente invention concerne un procédé de traitement mis en œuvre par un dispositif électronique opérant sous le contrôle d'un terminal, ledit procédé comprenant :
- réception d'une première commande APDU provenant du terminal ;
- initiation d'un premier traitement de la première commande APDU ;
- sur détection d'au moins un premier événement, exécution d'un mécanisme de suspension comprenant :
   ∘ suspension du premier traitement de la première commande APDU avant achèvement dudit premier traitement ; et
   ∘ envoi au terminal d'un message de suspension indiquant ladite suspension du premier traitement, ledit message de suspension comprenant un premier identifiant de ladite première commande APDU ;
- après la suspension du premier traitement, si une commande de reprise d'exécution comportant le premier identifiant de la première commande APDU est reçue en provenance du terminal, reprise de l'exécution du premier traitement de la première commande APDU.

L'invention peut ainsi permettre à un dispositif électronique d'opérer sous le contrôle d'un terminal externe pour traiter une transaction (une transaction de paiement ou autre) en coopérant avec le terminal, par exemple via une liaison série, selon le procédé de traitement.

L'invention permet de mettre en œuvre des échanges d'APDUs de façon plus flexible et plus efficace entre un terminal et un dispositif électronique tel qu'une carte à puce (ou tout autre dispositif électronique apte à coopérer avec le terminal via des APDUs), et ce tout en respectant le protocole APDU tel que défini dans le standard ISO 7816. En particulier, le terminal peut contrôler efficacement le dispositif électronique dans la mesure où, sur détection que le traitement d'une première commande par le dispositif électronique est suspendu, le terminal peut envoyer une nouvelle commande APDU pour initier un nouveau traitement (différent du traitement de la première commande) par le dispositif électronique. De même, le dispositif électronique est capable de traiter de façon plus souple et efficace des commandes APDU en mettant en suspens l'exécution d'une première commande APDU afin d'initier si besoin le traitement d'une nouvelle commande APDU (différente de la première commande APDU) reçue du terminal.

Selon au moins un mode de réalisation, le procédé de traitement comprend une étape de réception, en provenance du terminal, d'au moins une nouvelle commande APDU (autre que la première commande APDU) causant l'exécution par le dispositif électronique d'au moins un traitement correspondant (autre que le premier traitement) pendant que le premier traitement de la première commande APDU est en suspens.

Selon un mode de réalisation particulier, ledit au moins un premier évènement comprend au moins l'un parmi :
- expiration d'une durée prédéfinie allouée pour l'exécution du premier traitement ;
- réception, en provenance du terminal, d'une commande de suspension requérant la suspension du premier traitement ;
- détection que la première commande APDU est d'un type prédéfini ;
- réception, en provenance d'une unité de mesure interne ou externe au dispositif électronique, de données prédéfinies.

Selon un mode de réalisation particulier, le mécanisme de suspension comprend :
- déclenchement d'un compteur de temps à compter de l'initiation dudit premier traitement ; et
- sur détection, en tant que premier événement, qu'une durée prédéfinie a expiré selon le compteur de temps, déclenchement de ladite suspension du premier traitement de la première commande APDU et de l'envoi au terminal du message de suspension.

Selon un mode de réalisation particulier, le mécanisme de suspension comprend en outre, sur détection dudit premier événement :
- génération du premier identifiant de la première commande APDU ; et
- insertion dudit premier identifiant dans le message de suspension avant ledit envoi au terminal.

Selon un mode de réalisation particulier, le mécanisme de suspension comprend en outre, sur détection dudit au moins un premier événement :
- enregistrement dans une mémoire du dispositif électronique d'un statut de suspension en association avec ledit premier identifiant, ledit statut de suspension spécifiant que le premier traitement est couramment suspendu.

Selon un mode de réalisation particulier, le procédé comprend :
- si une commande d'abandon comportant le premier identifiant de la première commande ADPU est reçue alors que le premier traitement de la première commande APDU est couramment suspendu, suppression dans ladite mémoire du statut de suspension associé au premier identifiant pour mettre fin au premier traitement avant son exécution totale.

Selon un mode de réalisation particulier, le procédé comprend en outre, alors que le premier traitement de la première commande APDU est couramment suspendu :
- réception d'une deuxième commande APDU provenant du terminal ; et
- en réponse à ladite deuxième commande APDU, initiation d'un deuxième traitement de la deuxième commande APDU.

Selon un mode de réalisation particulier, le procédé comprend, alors qu'au moins ledit premier traitement de la première commande APDU est couramment suspendu :
- réception en provenance du terminal d'une requête de statut ; et
- en réponse à ladite requête de statut, envoi au terminal d'un message de statut comportant un statut de suspension en association avec ledit premier identifiant pour indiquer que la première commande ADPU est actuellement suspendue.

Selon un mode de réalisation particulier, le procédé comprend en outre, alors que le premier traitement de la première commande APDU est couramment suspendu :
- détection d'au moins un deuxième évènement comprenant une détection qu'aucune commande ADPU n'est en cours de traitement par ledit dispositif électronique ; et
- en réponse audit au moins un deuxième événement, reprise de l'exécution du premier traitement de la première commande APDU indépendamment d'une quelconque commande reçue du terminal.

Selon un mode de réalisation particulier, le procédé comprend, suite à la reprise de l'exécution du premier traitement indépendamment d'une quelconque commande reçue du terminal :
- détection que le premier traitement de la première commande ADPU est totalement exécuté ; puis
- enregistrement dans une mémoire du dispositif électronique d'un statut d'exécution totale en association avec ledit premier identifiant, pour spécifier que le premier traitement a été totalement exécuté ;
- réception en provenance du terminal d'une requête de statut ; et
- en réponse à ladite requête de statut, envoi au terminal d'un message de statut comportant le statut d'exécution totale en association avec ledit premier identifiant pour indiquer l'exécution totale du premier traitement.

Selon un mode de réalisation particulier, le dispositif électronique et le terminal coopère selon le protocole APDU.

Selon un mode de réalisation particulier, le dispositif électronique détecte le type de la première commande APDU et détermine, à partir du type de la première commande APDU, que ledit premier traitement doit être suspendu.

Selon un mode de réalisation particulier, le dispositif électronique coopère (communique) avec le terminal via une ligne de communication série.

Selon un mode de réalisation particulier, le dispositif électronique est une carte à puce.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en œuvre dans un dispositif électronique tel qu'une carte à puce par exemple, ou plus généralement dans un ordinateur, ce programme comportant des instructions adaptées à la mise en œuvre des étapes d'un procédé de traitement tel que défini dans le présent document.

L'invention vise aussi un support d'enregistrement (ou support d'informations) lisible par un dispositif électronique tel qu'une carte à puce ou un ordinateur, et comportant des instructions d'un programme d'ordinateur tel que défini dans le présent document.

La présente invention vise également un procédé de contrôle mis en œuvre par un terminal contrôlant un dispositif électronique, ledit procédé comprenant :
- envoi au dispositif électronique d'une première commande APDU pour initier l'exécution d'un premier traitement de la première commande APDU par le dispositif électronique ;
- réception en provenance du dispositif électronique d'un message de suspension indiquant la suspension du premier traitement, ledit message de suspension comprenant un premier identifiant de ladite première commande APDU ;
- après la réception du message de suspension, envoi au dispositif électronique d'au moins l'une parmi :
   ∘ une commande de reprise d'exécution comportant le premier identifiant de la première commande APDU, pour déclencher la reprise de l'exécution du premier traitement par le dispositif électronique ; et
   ∘ une commande d'abandon comportant le premier identifiant de la première commande ADPU, pour mettre fin au premier traitement par le dispositif électronique avant son exécution totale.

Selon un mode de réalisation particulier, le procédé de contrôle comprend en outre, suite à la réception du message de suspension et avant l'envoi d'une commande de reprise d'exécution ou d'une commande d'abandon, au moins l'un parmi :
- envoi d'une deuxième commande APDU au dispositif électronique pour initier l'exécution d'un deuxième traitement de la deuxième commande APDU par le dispositif électronique alors que le premier traitement de la première commande APDU est couramment suspendu ; et
- envoi au dispositif électronique d'une requête de statut requérant au dispositif électronique d'indiquer par retour chaque traitement de commande APDU couramment en suspens.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations, ce programme étant susceptible d'être mis en œuvre dans un dispositif électronique tel qu'un terminal ou lecteur de carte à puce par exemple, ou plus généralement dans un ordinateur, ce programme comportant des instructions adaptées à la mise en œuvre des étapes d'un procédé de contrôle tel que défini dans le présent document.

L'invention vise aussi un support d'enregistrement (ou support d'informations) lisible par un dispositif électronique tel qu'un terminal, un lecteur de carte à puce ou un ordinateur, et comportant des instructions d'un programme d'ordinateur tel que défini dans le présent document.

A noter que les programmes d'ordinateur mentionnés dans le présent document peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés dans le présent document peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

La présente invention vise également un dispositif électronique apte à mettre en œuvre le procédé de traitement tel que défini dans le présent document. En particulier, l'invention prévoit un dispositif électronique apte à opérer sous le contrôle d'un terminal, comprenant :
- un module de réception configuré pour recevoir une première commande APDU provenant du terminal ;
- un module d'exécution configuré pour initier un premier traitement de la première commande APDU ;
- un module de contrôle configuré, sur détection d'au moins un premier événement, pour exécuter un mécanisme de suspension causant :
   ∘ suspension du premier traitement de la première commande APDU par le module d'exécution avant achèvement dudit premier traitement ; et
   ∘ envoi au terminal, par un module d'envoi du dispositif électronique, d'un message de suspension indiquant ladite suspension du premier traitement, ledit message de suspension comprenant un premier identifiant de ladite première commande APDU ;
- le module d'exécution étant configuré, après la suspension du premier traitement, pour reprendre l'exécution du premier traitement de la première commande APDU si une commande de reprise d'exécution comportant le premier identifiant de la première commande APDU est reçue en provenance du terminal.

Le dispositif électronique est par exemple une carte à puce.

A noter que les différents modes de réalisation mentionnés ci-avant (ainsi que ceux décrits ci-après) en relation avec le procédé de traitement de l'invention ainsi que les avantages associés s'appliquent de façon analogue au dispositif électronique de l'invention.

Pour chaque étape du procédé de traitement, le dispositif électronique de l'invention peut comprendre un module correspondant configuré pour réaliser ladite étape.

La présente invention vise également un terminal apte à mettre en œuvre le procédé de contrôle tel que défini dans le présent document. En particulier, l'invention prévoit un terminal apte à contrôler un dispositif électronique comprenant :
- un module d'envoi configuré pour envoyer au dispositif électronique une première commande APDU pour initier l'exécution d'un premier traitement de la première commande APDU par le dispositif électronique ;
- un module de réception configuré pour recevoir, en provenance du dispositif électronique, un message de suspension indiquant la suspension du premier traitement, ledit message de suspension comprenant un premier identifiant de ladite première commande APDU ;
- ledit module d'envoi étant configuré pour envoyer, après la réception du message de suspension par le module de réception, au moins l'une parmi :
   ∘ une commande de reprise d'exécution comportant le premier identifiant de la première commande APDU, pour déclencher la reprise de l'exécution du premier traitement par le dispositif électronique ; et
   ∘ une commande d'abandon comportant le premier identifiant de la première commande ADPU, pour mettre fin au premier traitement par le dispositif électronique avant son exécution totale.

A noter que les différents modes de réalisation mentionnés ci-avant (ainsi que ceux décrits ci-après) en relation avec le procédé de contrôle de l'invention ainsi que les avantages associés s'appliquent de façon analogue au terminal de l'invention.

Pour chaque étape du procédé de contrôle, le terminal de l'invention peut comprendre un module correspondant configuré pour réaliser ladite étape.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement, sous forme d'un diagramme, la structure d'un terminal et d'une carte à puce (ou plus généralement un dispositif électronique) selon un mode de réalisation particulier de l'invention ;
[Fig. 2] La figure 2 représente schématiquement une carte à puce (ou plus généralement un dispositif électronique) selon un mode de réalisation particulier de l'invention ;
[Fig. 3] La figure 3 représente schématiquement un terminal selon un mode de réalisation particulier de l'invention ;
[Fig. 4] La figure 4 représente schématiquement, sous forme d'un diagramme, les étapes d'un procédé de contrôle et d'un procédé de traitement mis en œuvre respectivement par un terminal et une carte à puce, selon un mode de réalisation particulier de l'invention ;
[Fig. 5] La figure 5 représente schématiquement, sous forme d'un diagramme, les étapes d'un procédé de traitement mis en œuvre par une carte à puce, selon un mode de réalisation particulier de l'invention ;
[Fig. 6] La figure 6 représente schématiquement, sous forme d'un diagramme, les étapes d'un procédé de contrôle et d'un procédé de traitement mis en œuvre respectivement par un terminal et une carte à puce, selon un mode de réalisation particulier de l'invention ;
[Fig. 7] La figure 7 représente schématiquement, sous forme d'un diagramme, les étapes d'un procédé de contrôle et d'un procédé de traitement mis en œuvre respectivement par un terminal et une carte à puce, selon un mode de réalisation particulier de l'invention ; et
[Fig. 8] La figure 8 représente schématiquement, sous forme d'un diagramme, les étapes d'un procédé de contrôle et d'un procédé de traitement mis en œuvre respectivement par un terminal et une carte à puce, selon un mode de réalisation particulier de l'invention.

### Description des modes de réalisation

Comme déjà indiqué, l'invention vise de façon générale à améliorer les échanges entre un terminal et un dispositif électronique coopérant ensemble via des commandes APDU, de sorte que le terminal puisse contrôler la carte à puce de façon plus flexible et efficace, et de sorte que le dispositif électronique puisse adapter son fonctionnement en conséquence.

L'invention, selon ses différents modes de réalisation, met ainsi en œuvre un dispositif électronique apte à opérer sous le contrôle d'un terminal, ce dispositif étant configuré pour initier un premier traitement en réponse à une première commande APDU reçu du terminal et, sur détection d'au moins un évènement prédéfini, suspendre ce premier traitement avant son exécution totale. Le dispositif électronique peut alors envoyer au terminal un message de suspension lui indiquant que le premier traitement précité est suspendu, ce qui permet de libérer la ligne de communication entre le terminal et le dispositif électronique, par exemple pour initier le traitement d'une autre commande APDU. Ainsi, suite à la suspension du premier traitement de la première commande APDU, le dispositif électronique peut reprendre l'exécution du premier traitement, par exemple en réponse à une commande de reprise d'exécution émise par le terminal à cet effet. Cette commande de reprise d'exécution peut comprendre un identifiant de la première commande, cet identifiant ayant préalablement été fourni par le dispositif électronique dans son message de suspension, afin de permettre au dispositif électronique d'identifier la commande APDU dont le traitement doit reprendre.

L'invention, selon différents modes de réalisation, met également en œuvre un terminal apte à contrôler un dispositif électronique au sens de l'invention. Le terminal peut ainsi envoyer une première commande ADPU pour initier un premier traitement par le dispositif électronique, puis recevoir en provenance dudit dispositif un message de suspension indiquant que le premier traitement a été suspendu. Suite à cette suspension, le terminal peut envoyer une commande de reprise d'exécution comme mentionné ci-avant pour relancer l'exécution, par le dispositif électronique, du premier traitement de la première commande ADPU.

L'invention vise également des procédés correspondants, à savoir un procédé de traitement mis en œuvre par le dispositif électronique et un procédé de contrôle mis en œuvre par le terminal.

D'autres aspects et avantages de la présente invention ressortiront des exemples de réalisation décrits ci-dessous en référence aux dessins mentionnés ci-avant.

Dans ce document, des exemples de mise en œuvre de l'invention sont décrits dans le cadre du fonctionnement d'une carte à puce coopérante avec un terminal. A noter toutefois que l'invention ne s'applique pas de manière exclusive à une carte à puce mais peut s'appliquer plus généralement à un quelconque dispositif électronique apte à coopérer avec un terminal en échangeant des APDUs (autrement dit, apte à coopérer selon le protocole APDU).

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

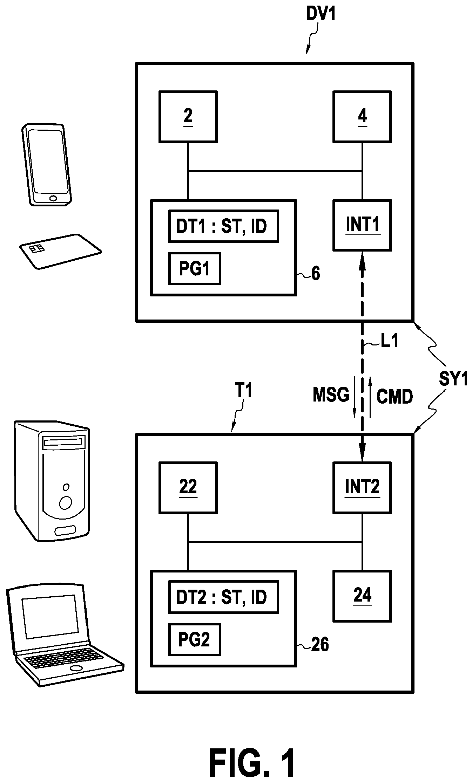

La **figure** 1 représente la structure d'un terminal T1 et d'un dispositif électronique DV1, selon un mode de réalisation particulier. Le terminal T1 et le dispositif électronique DV1 sont aptes à coopérer ensemble pour former un système SY1. Le terminal T1 est un terminal externe au dispositif électronique DV1.

Comme indiqué en détail ci-après, on considère par exemple que le dispositif électronique DV1 est configuré pour opérer sous le contrôle du terminal externe T1 pour traiter une transaction en coopérant avec le terminal externe T1 via une liaison de communication L1 de type série.

Plus particulièrement, le dispositif électronique DV1 est apte à traiter des transactions sous le contrôle du terminal T1 selon le protocole APDU tel que défini par le standard ISO 7816. Comme déjà indiqué, on considère ici à titre d'exemple que le dispositif électronique DV1 est une carte à puce, et plus particulièrement une carte de paiement (ou carte bancaire), et que le terminal T est un terminal de paiement, d'autres modes de réalisation étant toutefois possibles. D'autres types de cartes à puce ou, plus généralement, d'autres types de dispositifs électroniques sont envisageables dans le cadre de l'invention.

La carte à puce DV1 est par exemple configurée pour traiter des transactions de paiement selon le standard EMV (pour « Europay Mastercard Visa ») avec le terminal T1. La carte à puce DV1 est par exemple conforme à la norme ISO 7816, d'autres exemples étant toutefois possibles.

Le terminal T1 et la carte à puce DV1 sont configurées pour communiquer ensemble selon le protocole APDU au travers d'une liaison de communication L1 du type liaison série. Cette liaison série L1 permet ainsi au terminal T1 de contrôler la carte à puce DV1 au moyen de commandes APDU, ces dernières déclenchant des traitements correspondants dans la carte à puce DV1. En réponse aux commandes APDU émises par le terminal T1 via la liaison série L1, la carte à puce DV1 réalise des traitements appropriés, tels que la mise en œuvre de fonctions quelconques (par exemple : des fonctions cryptographiques, des opérations d'écriture, des opérations de lecture, etc.) et envoie en réponse des messages APDU, tels que par exemple des messages de statut indiquant un résultat ou un état dans lequel se trouve la carte à puce DV1.

Comme déjà indiqué, la liaison série L1 se caractérise en ce que les paquets de données se succèdent, les uns après les autres, sur une seule voie entre le terminal et la carte à puce. Conformément au protocole APDU, la carte à puce DV1 et son terminal associé T1 ne peuvent ainsi traiter qu'une seule commande APDU à la fois. Lorsque le terminal T1 envoie une commande APDU, il donne la main à la carte à puce DV1 pour traiter cette commande, et se met en attente d'une réponse de la part de la carte à puce. Une fois que le terminal T1 reçoit une réponse de la carte à puce DV1 (ou, en cas de non réponse, une fois que le terminal T1 a causé la réinitialisation de la carte à puce DV1 comme précédemment décrit), il peut alors utiliser la liaison série L1 pour envoyer une nouvelle commande APDU à la carte à puce DV1. Afin d'éviter tous risques de collision dans les communications réalisées sur la ligne série L1, le terminal T1 est configuré pour ne pas envoyer de nouvelle commande APDU à la carte à puce DV1 tant que le terminal T1 n'a pas reçu une réponse de la carte à puce DV1 (ou, en cas de non réponse, tant que le processus de réinitialisation de la carte à puce DV1 n'a pas été achevé, comme indiqué ci-dessus).

La carte à puce DV1 comprend dans cet exemple un processeur 2, une mémoire volatile (RAM) 4, une mémoire non volatile réinscriptible 6 et une interface de communication INT1.

Plus spécifiquement, la mémoire non volatile réinscriptible 6 (de type Flash ou EEPROM pour « Electrically Erasable Programmable Read Only Memory » par exemple) est utilisée pour stocker des données de statut (ou données d'état) DT1 définissant au moins un statut (ou état) ST en association avec un identifiant ID respectif d'une commande APDU. L'usage et l'intérêt de ces données de statut DT1 seront décrits plus en détail ultérieurement.

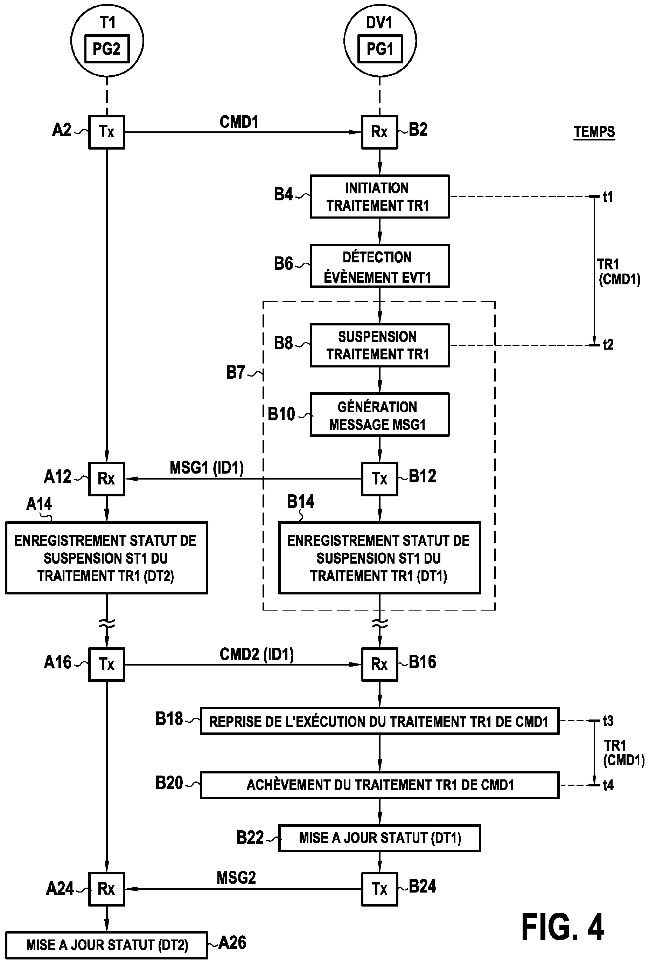

La mémoire non volatile réinscriptible 6 constitue en outre un support d'enregistrement (ou support d'informations) conforme à un mode de réalisation particulier, lisible par la carte à puce DV1, et sur lequel est enregistré un programme d'ordinateur PG1 conforme à un mode de réalisation particulier. En variante, le programme d'ordinateur PG1 est stocké dans une mémoire de la carte à puce différente de la mémoire 6, telle qu'une deuxième mémoire non volatile réinscriptible ou une mémoire morte (ROM). Ce programme d'ordinateur PG1 comporte des instructions, exécutable par le processeur 2, pour exécuter les étapes d'un procédé de traitement selon un mode de réalisation particulier. Les étapes de ce procédé sont décrites plus en détail ultérieurement en référence aux **figures 4-8****.**

Le processeur 2 utilise la mémoire volatile 4 pour réaliser les différentes opérations et fonctions nécessaires au fonctionnement de la carte à puce DV1, y compris pour exécuter le programme d'ordinateur PG1 lors de la mise en œuvre du procédé de traitement de l'invention.

L'interface de communication INT1 est configurée pour établir une communication entre la carte à puce DV1 et le terminal T via la liaison série L1. En particulier, la carte à puce DV1 est configurée pour recevoir des commandes APDU (notées généralement CMD) et pour envoyer des messages APDU (notés généralement MSG) au moyen de son interface de communication INT1.

La nature de la liaison L1 peut varier selon le cas. Selon un exemple particulier, la liaison de communication L1 est une liaison par contact. Pour ce faire, le module d'interface INT1 comprend (ou utilise) des surfaces de contact présentes à la surface du corps de carte, ces surfaces de contact étant destinées à accueillir des broches de contact du terminal T1 pour établir une communication par contact. En variante, la liaison de communication L1 est une liaison sans contact (par exemple de type NFC). Dans ce cas, l'interface de communication INT1 comprend (ou utilise) une antenne radiofréquence (RF) pour échanger en sans contact des signaux RF avec le terminal T1. La carte à puce DV1 peut par exemple être configurée pour communiquer en sans contact avec le terminal T1 via la liaison L1 conformément à l'un au moins parmi les standards suivants qui constituent des surcouches de transport et de management de données (commandes APDU) du standard ISO 7816 : ISO 14443, ETSI 102622 (HCl), ETSI 102613(SWP).

D'autre part, le terminal T1 comprend dans cet exemple un processeur 22, une mémoire volatile (RAM) 24, une mémoire non volatile réinscriptible 26 et une interface de communication INT2.

Plus spécifiquement, la mémoire non volatile réinscriptible 26 (de type Flash ou EEPROM par exemple) est utilisée pour stocker des données de statut (ou données d'état) DT2 définissant au moins un statut (ou état) ST en association avec un identifiant ID respectif d'une commande APDU. L'usage et l'intérêt de ces données de statut DT2 seront décrits plus en détail ultérieurement.

La mémoire non volatile réinscriptible 26 constitue en outre un support d'enregistrement (ou support d'informations) conforme à un mode de réalisation particulier, lisible par le terminal T1, et sur lequel est enregistré un programme d'ordinateur PG2 conforme à un mode de réalisation particulier. En variante, le programme d'ordinateur PG2 est stocké dans une mémoire du terminal T1 différente de la mémoire 26, telle qu'une deuxième mémoire non volatile réinscriptible ou une mémoire morte (ROM). Ce programme d'ordinateur PG2 comporte des instructions, exécutable par le processeur 22, pour exécuter les étapes d'un procédé de contrôle selon un mode de réalisation particulier. Les étapes de ce procédé sont décrites plus en détail ultérieurement en référence aux **figures 4-8****.**

Le processeur 22 utilise la mémoire volatile 24 pour réaliser les différentes opérations et fonctions nécessaires au fonctionnement du terminal T1, y compris pour exécuter le programme d'ordinateur PG2 lors de la mise en œuvre du procédé de contrôle de l'invention.

L'interface de communication INT2 est configurée pour établir, en coopération avec l'interface de communication INT1, une communication entre le terminal T1 et la carte à puce DV1 via la liaison série L1. En particulier, le terminal T1 est configuré pour envoyer des commandes APDU et pour recevoir en retour des messages APDU au moyen de son interface de communication INT2.

De façon analogue à l'interface de communication INT1, l'interface de communication INT2 peut être adaptée pour établir une liaison L1 par contact et/ou sans contact selon le cas.

Selon un exemple particulier, le terminal T1 est en outre apte à utiliser la liaison série L1 pour envoyer une ou des commandes CMD de type ADPU à la carte à puce DV1 selon un protocole de communication autre que le standard ISO 7816. Le terminal T1 est par exemple capable d'envoyer à la carte à puce DV1 au moins une commande APDU via la liaison série L1 selon le protocole HCI pour « Host Controller Interface », ce qui permet au terminal T1 d'envoyer des instructions à la carte à puce DV1 même si le canal protocolaire dédié aux APDUs est bloqué (car en attente d'une réponse de la carte à puce DV1).

Plus précisément, la carte à puce DV1 peut comprendre au moins l'une parmi les interfaces de communication (ou lignes) suivantes : une interface ISO configurée pour établir une communication par contact selon le protocole ISO 7816 avec le terminal T1 et une interface SWP (pour « Single Wire Protocol ») configurée pour établir une communication sans contact selon le protocole SWP avec le terminal T1. Dans le cas particulier où le protocole SWP est utilisé, l'interface SWP peut ainsi recevoir des commandes APDU, notées SWP[HCl[APDU]], encapsulées dans le protocole HCI, dans un cas particulier d'utilisation du protocole HCI, qui est lui-même encapsulé dans le protocole SWP. La carte à puce DV1 peut alors procéder à la décapsulation des commandes (trames) SWP[HCl[APDU]] reçues via son interface SWP de sorte à en extraire le contenu correspondant à la commande APDU. Etant donné que la carte à puce DV1 n'est généralement pas capable de traiter deux commandes du terminal T1 en même temps (pas de multi-fils d'exécution (« multithread ») en parallèle), la carte ne peut pas initier le traitement d'une commande SWP[HCl[APDU]] tant qu'une commande classique APDU (ISO), précédemment reçue sur l'interface l'ISO, est en cours de traitement dans la carte à puce DV1 (et inversement).

A noter que certains éléments généralement présents dans une carte à puce et dans un lecteur de carte ont été volontairement omis car ils ne sont pas nécessaires à la compréhension de la présente invention.

Il importe également de noter que la carte à puce DV1 et le terminal T1 associé représentés en **figure** 1 ne constituent qu'un exemple de réalisation, d'autres mises en œuvre étant possibles dans le cadre de l'invention. L'homme du métier comprend par ailleurs que certains éléments de la carte à puce DV1 et du terminal T1 ne sont décrits ici que pour faciliter la compréhension de l'invention, ces éléments n'étant pas nécessaires pour mettre en œuvre l'invention.

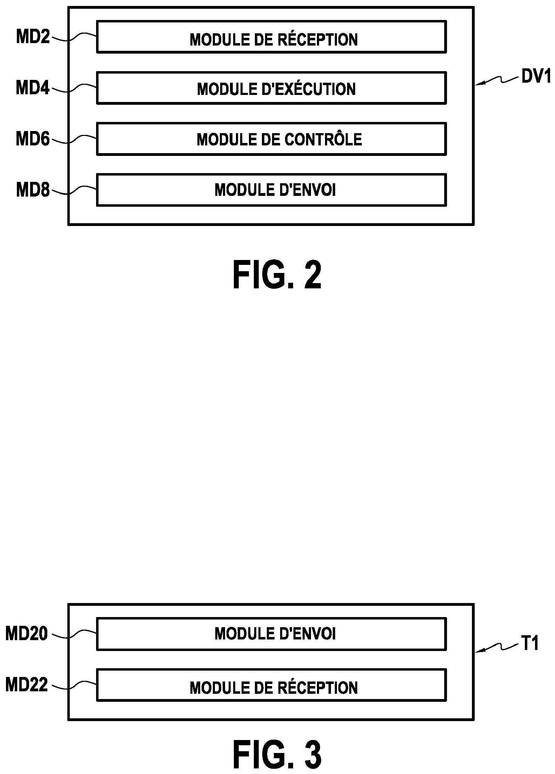

Comme représenté en **figure** 2 selon un mode de réalisation particulier, le processeur 2 de la carte à puce DV1 piloté par le programme d'ordinateur PG1 met ici en œuvre un certain nombre de modules, à savoir : un module de réception MD2, un module d'exécution MD4, un module de contrôle MD6 et un module d'envoi MD8.

Le module de réception MD2 est configuré pour recevoir une première commande APDU provenant du terminal T1 via la liaison de communication L1.

Le module d'exécution MD4 est configuré pour initier un premier traitement de la première commande APDU reçue par le module de réception MD2. Ce premier traitement peut être de diverses natures selon le cas.

Le module de contrôle MD6 configuré pour exécuter, sur détection d'au moins un premier événement, un mécanisme de suspension causant :
- la suspension du premier traitement de la première commande APDU par le module d'exécution avant achèvement (i.e. avant l'exécution totale) de ce premier traitement ; et
- l'envoi au terminal T1, par le module d'envoi MD8, d'un message de suspension (de type APDU) indiquant ladite suspension du premier traitement.

Comme indiqué par la suite, ce message de suspension peut comprendre un identifiant de la première commande APDU mentionnée ci-avant.

Le module d'exécution MD4 est configuré, après la suspension du premier traitement de la première commande APDU, pour reprendre l'exécution dudit premier traitement en réponse à une commande de reprise d'exécution reçue en provenance du terminal T1 (ou pour reprendre l'exécution dudit premier traitement si une telle commande de reprise d'exécution est reçue en provenance du terminal T1).

Comme indiqué par la suite, cette commande de reprise d'exécution peut comporter l'identifiant de la première commande APDU.

Comme représenté en **figure 3** selon un mode de réalisation particulier, le processeur 22 du terminal T1 piloté par le programme d'ordinateur PG2 met ici en œuvre un certain nombre de modules, à savoir : un module d'envoi MD20 et un module de réception MD22.

Le module d'envoi MD20 est configuré pour envoyer à la carte à puce DV1 une première commande APDU pour initier l'exécution d'un premier traitement de la première commande APDU par ladite carte.

Le module de réception MD22 est configuré pour recevoir, en provenance de la carte à puce DV1, un message de suspension (de type APDU) indiquant la suspension du premier traitement. Comme indiqué par la suite, ce message de suspension peut comprendre un identifiant de la première commande APDU.

Le module d'envoi MD20 est en outre configuré pour envoyer à la carte à puce DV1, après la réception par le module de réception MD22 du message de suspension, au moins l'une parmi :
a) une commande de reprise d'exécution comportant l'identifiant de la première commande APDU, pour déclencher la reprise de l'exécution du premier traitement par la carte à puce DV1 ; et
b) une commande de fin comportant l'identifiant de la première commande ADPU, pour mettre fin au premier traitement par le dispositif électronique avant son exécution totale.

Comme indiqué par la suite, le module d'envoi MD20 peut également être configuré pour envoyer à la carte à puce DV1, après la réception par le module de réception MD22 du message de suspension ou de tout autre type de message classique, une requête de statut (commande d'audit) conforme à l'invention ou une quelconque autre commande APDU classique. Une telle requête de statut permet au terminal T1 de commander à la carte à puce DV1 de lui indiquer la ou les commandes APDU couramment en suspens (s'il y en a).

Le module d'envoi MD20 peut être configuré pour envoyer la commande de reprise d'exécution (cas a)), ou pour envoyer la commande de fin (cas b)), ou encore pour envoyer la commande de reprise d'exécution pour relancer l'exécution du premier traitement puis pour envoyer ultérieurement une commande de fin pour mettre fin au premier traitement avant son exécution totale (cas a) et b)).

La configuration et le fonctionnement des modules MD2-MD8 de la carte à puce DV1 et des modules MD20-MD22 du terminal T1 apparaîtront plus précisément dans les exemples de réalisation décrits ci-après en référence aux **figures 4-8****.**

A noter que les modules MD2-MD8 et MD20-MD22 tels que représentés en **figures 2-3** ne représentent qu'un exemple de mise en œuvre non limitatif de l'invention. De manière générale, pour chaque étape du procédé de traitement mis en œuvre par la carte à puce DV1, cette dernière peut comprendre un module correspondant configuré pour réaliser ladite étape. De même, pour chaque étape du procédé de contrôle mis en œuvre par le terminal T1, ce dernier peut comprendre un module correspondant configuré pour réaliser ladite étape.

Un mode de réalisation particulier de l'invention est à présent décrit en référence à la **figure 4****.** Plus précisément, la carte à puce DV1 et le terminal T1 représentés en **figures 1-3** mettent en œuvre respectivement un procédé de traitement et un procédé de contrôle en exécutant les programmes d'ordinateur correspondants PG1, PG2.

On supposera dans ce mode de réalisation que le terminal T1 et la carte à puce DV1 ont établi entre eux une liaison de communication L1 de type série comme précédemment décrite en référence à la **figure 1****.**

Au cours d'une étape d'envoi A2, le terminal T1 envoie à la carte à puce DV1 une première commande ADPU notée CMD1, que la carte à puce DV1 reçoit en B2 (**figure 4**).

En réponse à cette première commande CMD1, la carte à puce DV1 initie (B4) un premier traitement TR1 à un instant t1. La nature de ce traitement TR1 peut varier selon le cas et dépend du type de la première commande CMD1 reçue. Ce premier traitement TR1 peut par exemple être un traitement cryptographique (génération d'une clé cryptographique, une opération de lecture ou écriture, ou autre).

Au cours du traitement TR1, on considère que la carte à puce DV1 détecte (B6) ensuite un évènement EVT1. Sur détection (B6) de cet évènement EVT1, la carte à puce DV1 exécute alors un mécanisme de suspension (ou phase de suspension) B7 comprenant les étapes B8, B10 et B12, et éventuellement aussi l'étape B14, comme décrit ci-après.

La nature de l'événement déclencheur EVT1 peut varier selon le cas. La carte à puce DV1 peut être configurée pour stocker dans sa mémoire 6 au moins un évènement prédéfini et pour déterminer, au cours de l'exécution du traitement TR1, si un évènement EVT1 parmi ce ou ces évènements prédéfinis est détecté.

Selon un exemple particulier, cet évènement déclencheur EVT1 comprend au moins un événement, voire une pluralité d'événements qui doivent tous être détectés pour déclencher l'exécution du mécanisme de suspension B7.

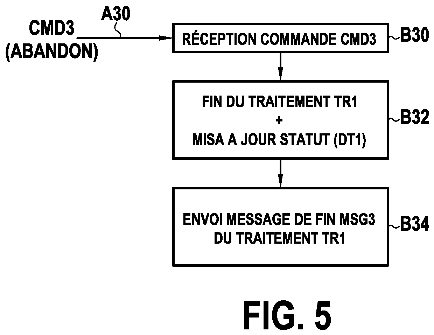

Le ou les évènements déclencheurs EVT1 peuvent comprendre au moins l'un parmi :
- l'expiration d'une durée prédéfinie (notée ci-après Ts en **figue 6**) allouée pour l'exécution du premier traitement TR1 ;
- la réception, en provenance du terminal T1, d'une commande de suspension APDU (notée ci-après CMD3 en **figure 5**) conforme à l'invention, cette commande requérant la suspension du premier traitement TR1 en cours ; et
- la détection que la première commande CMD1 est d'un type prédéfini (tel que le type de commande READ RECORD, READ BINARY, ou tout autre type de commande APDU).

Le ou les évènements déclencheurs EVT1 peuvent également comprendre la réception, en provenance d'une unité de mesure (par exemple un capteur ou tout autre dispositif approprié) interne ou externe à la carte à puce DV1 (par exemple le terminal T1 ou un capteur de la carte à puce DV1), de données prédéfinies. La carte à puce DV1 peut recevoir ces données prédéfinies sous différentes formes, y compris dans une commande (de type APDU ou autre) qui transmet lesdites données. Ces données prédéfinies peuvent être de diverses natures, il peut s'agir par exemple de données représentatives de la détection d'une attaque laser ou électromagnétique subie par la carte à puce DV1, de données indicatives d'une accélération subie par la carte à puce DV1 et/ou par le terminal T1, etc.

Ainsi, selon un exemple particulier, la carte à puce DV1 peut mesurer le temps qui s'écoule à compter de l'instant t1 (correspondant à l'initiation B4 du traitement TR1) et détecter en tant qu'événement déclencheur EVT1 l'expiration d'une durée prédéfinie (ou délai prédéfini) Ts si le temps écoulé atteint la durée prédéfinie Ts alors que le traitement TR1 n'est pas encore achevé.

La carte à puce DV1 peut également déclencher le mécanisme de suspension B7 sur détection qu'une commande de suspension APDU (CMD3, **figure 5**) a été reçue en provenance du terminal T1. Une telle commande de suspension constitue une nouvelle commande APDU conforme à l'invention, qui permet dans le cas présent au terminal T1 de commander à la carte à puce DV1 de suspendre le traitement TR1 en cours de la commande CMD1.

Selon un premier exemple, le terminal T1 est configuré de sorte qu'il ne peut pas envoyer une nouvelle commande APDU à la carte à puce DV1 tant que cette dernière n'a pas envoyé un message ADPU (un message de statut, éventuellement accompagné de données) en réponse à la commande CMD1. Autrement dit, le terminal T1 ne peut envoyer une nouvelle commande APDU qu'une fois que la carte à puce DV1 lui a redonné la main. Dans ce cas, l'envoi par le terminal T1 d'une commande de suspension à la carte à puce DV1 n'est pas possible à ce stade (B6). Toutefois, d'autres implémentations sont possibles. Dans un exemple particulier, le terminal T1 est configuré pour envoyer une commande de suspension comme indiqué ci-avant, même si le terminal T1 n'a pas reçu de réponse de la carte à puce DV1 à la commande CMD1, la réception de cette commande de suspension étant alors détectée (B6) en tant qu'événement EVT1 par la carte à puce DV1.

Selon un exemple particulier, lors du premier traitement TR1, la carte à puce DV1 détecte qu'elle nécessite une période de temps supérieure à une durée prédéfinie qui lui est allouée par défaut pour réaliser le traitement TR1, aussi elle envoie au terminal T1 un message APDU pour demander l'allocation d'une période de temps supplémentaire pour traiter la commande CMD1. En réponse, le terminal T1 peut déterminer que l'allocation d'une période de temps supplémentaire n'est pas possible à ce stade et envoyer une commande de suspension à la carte à puce DV1 pour causer la suspension du traitement TR1, cette commande de suspension étant reçue (B6) en tant qu'événement EVT1 par la carte à puce DV1.

Par ailleurs, le type de la première commande CMD1 reçue en B2 (**figure 4**) depuis le terminal T1 peut également être pris en compte pour déterminer si l'événement EVT1 se produit. Ainsi, la carte à puce DV1 peut par exemple être configurée pour n'exécuter le mécanisme de suspension B7 que pour un ou des types de commandes APDU prédéfinis (par exemple pour des commandes APDU déclenchant un calcul de clés cryptographiques, ou des commandes APDU comportant des données d'entrées (par exemple des vecteurs d'initialisation) pour calculs de données de réponses cryptographiques).

La carte à puce DV1 peut prendre en compte un ou plusieurs parmi les critères éléments déclencheurs mentionnés ci-dessus pour déterminer (B6, **figure 4****),** en tant qu'événement EVT1, que le mécanisme de suspension B7 doit être déclenché.

Plus précisément, au cours du mécanisme de suspension B7, la carte à puce DV1 suspend (B8) le premier traitement TR1 de la commande CMD1 qui avait été déclenché par la première commande CMD1. La suspension du traitement TR1, qui se produit ici à l'instant t2, signifie que le traitement TR1 s'interrompt avant d'être achevé mais qu'il sera possible pour la carte à puce DV1 de le relancer ultérieurement pour poursuivre son exécution, comme décrit ci-après.

La carte à puce DV1 génère (B10) en outre un message APDU de suspension noté MSG1 qu'elle envoie au cours d'une étape B12 au terminal T1 via la liaison série L1. Lors de l'étape B10 de génération, la carte à puce DV1 détermine en particulier un identifiant ID1 de la première commande CMD1 (ou du premier traitement TR1 associé), et insère cet identifiant ID1 dans le message MSG1 avant son envoi B12 au terminal T1.

Dans cet exemple particulier, la carte à puce DV1 enregistre (B14) en outre dans sa mémoire 6, en association avec l'identifiant ID1, un statut (ou état) ST1 alloué au premier traitement TR1 (autrement dit, un statut alloué à la première commande CMD1). Ce statut ST1 constitue ici un statut de suspension (ou état de suspension) indiquant que le premier traitement TR1 a été suspendu. Dans cet exemple, ce statut de suspension ST1 est stocké en tant que données de statut (ou données d'état) DT1.

Des variantes de réalisation sont toutefois possibles sans qu'il soit nécessaire d'avoir recours à cet identifiant ID1. Dans ce cas, l'étape B14 d'enregistrement n'est pas nécessaire.

Comme représenté en **figure 4****,** le terminal T1 reçoit le message de suspension MSG1 comportant l'identifiant ID1 au cours d'une étape de réception A12.

Le terminal T1 enregistre (A14) ensuite dans sa mémoire 26, en association avec l'identifiant ID1, un statut (ou état) ST1 alloué au premier traitement TR1 (autrement dit, à la première commande CMD1). Ce statut ST1 constitue ici aussi un statut de suspension (ou état de suspension) indiquant que le premier traitement TR1 a été suspendu par la carte à puce DV1. Dans cet exemple, ce statut de suspension ST1 est stocké en tant que données de statut (ou données d'état) DT2.

Comme déjà indiqué, des variantes de réalisation sont toutefois possibles sans l'usage d'un tel identifiant ID1. Dans ce cas, l'étape A14 d'enregistrement n'est pas non plus nécessaire.

Le mécanisme de suspension B7 permet ainsi de libérer la liaison série L1 sur le plan du protocole APDU. A partir du message de suspension MSG1 reçu (A12), le terminal T1 détecte que la liaison série L1 est libre (du point de vue du protocole APDU) et qu'il est donc possible d'envoyer une nouvelle commande APDU (différente de la commande CMD1 ) via la liaison série L1 à la carte à puce DV1.

Différentes situations peuvent nécessiter la suspension du traitement d'une transaction au niveau de la carte à puce DV1. Il peut s'agir par exemple de libérer la liaison série L1 afin de donner la possibilité au terminal T1 d'envoyer une nouvelle commande ADPU s'il le souhaite, ce qui offre plus de souplesse et de réactivité lorsque la situation l'impose. Le terminal T1 peut ainsi envoyer au moins une nouvelle commande APDU à la carte à puce DV1 pour causer l'exécution d'au moins un traitement correspondant, pendant que le premier traitement TR1 de la commande CMD1 reste en suspens.

L'envoi d'une nouvelle commande APDU pendant que le traitement TR1 de la première commande CMD1 est en suspens n'est toutefois pas obligatoire. Il peut être utile de suspendre le premier traitement TR1 au niveau de la carte à puce DV1 à des fins de temporisation par exemple, afin de libérer la liaison série L1 et/ou de libérer des ressources de traitement de la carte à puce DV1, sans qu'une nouvelle commande soit finalement envoyée par le terminal T1 pour initier un nouveau traitement (autre que TR1).

Comme représenté en **figure 4****,** suite à la réception A12 du message de suspension MSG1 (c.-à-d. alors que le premier traitement TR1 de la commande CMD1 est en suspens), on suppose dans un exemple particulier que le terminal T1 envoie (A16) à la carte à puce DV1 une commande de reprise d'exécution CMD2 (de type ADPU) via la liaison série L1. Cette commande de reprise d'exécution CMD2 comprend dans cet exemple l'identifiant ID1 de la commande CMD1 dont le traitement TR1 est couramment suspendu.

Préalablement à l'envoi A16, le terminal T1 peut consulter ses données de statut DT2 pour vérifier que le traitement TR1 de la commande CMD1 est couramment en suspens et nécessite d'être poursuivi.

Au cours d'une étape B16 de réception, la carte à puce DV1 reçoit la commande de reprise d'exécution CMD2. La carte à puce DV1 extrait l'identifiant ID1 de la commande de reprise d'exécution CMD2 et en déduit alors que le premier traitement TR1 de la commande CMD1 doit reprendre.

Ainsi, en réponse à la commande de reprise d'exécution CMD2 comportant l'identifiant ID1, la carte à puce DV1 reprend (B18) à l'instant t3 l'exécution du traitement TR1 qui avait été précédemment suspendu en t2. Le traitement TR1 reprend dans le sens où il n'est pas relancé depuis le début mais se poursuit afin de compléter ce qui avait déjà été réalisé précédemment entre les instants t1 et t2.

Avant de reprendre l'exécution du traitement TR1 en B18, la carte à puce DV1 peut consulter ses données de statut DT1 pour vérifier que le traitement TR1 de la commande CMD1 est couramment en suspens et, dans l'affirmative, déclencher la reprise de l'exécution du traitement TR1 conformément à la commande de reprise d'exécution CMD2.

On suppose dans cet exemple que le traitement TR1 se poursuit jusqu'à son exécution complète en B20 à l'instant t4, bien que d'autres exemples soient possibles où plusieurs suspensions sont réalisées successivement pour le même traitement TR1.

Sur détection (B20) que le traitement TR1 de la commande CMD1 est achevé, la carte à puce DV1 met à jour (B22) ses données de statut DT1 dans sa mémoire 6 pour refléter le fait que le traitement TR1 est achevé. Dans cet exemple particulier, la carte à puce DV1 supprime le statut de suspension ST1 précédemment alloué en B14 au traitement TR1 en association à l'identifiant ID1, ce qui permet de libérer de l'espace mémoire. En variante, cette suppression est réalisée avant achèvement (B20) du traitement TR1, par exemple dès la reprise (B18) de l'exécution du traitement TR1.

Dans cet exemple, la carte à puce DV1 envoie (B24) en outre un message de statut APDU noté MSG2 au terminal T1 via la liaison série L1, ce message indiquant au terminal T1 que le traitement TR1 de la commande CMD1 est achevé (complètement exécuté).

Le terminal T1 reçoit le message de statut MSG2 en A24 et en déduit que le traitement de la commande CMD1 par la carte à puce DV1 est totalement exécuté. En réponse au message de statut MSG2, le terminal T1 peut alors mettre à jour (A26) ses données de statut DT2 dans sa mémoire 26 de façon analogue à la carte à puce DV1 en B22.

L'invention permet ainsi de mettre en œuvre des échanges d'APDUs de façon plus flexible et plus efficace entre le terminal T1 et la carte à puce DV1 tout en respectant le protocole APDU tel que défini dans le standard ISO 7816. En particulier, le terminal T1 peut contrôler efficacement la carte à puce DV1 dans la mesure où, sur détection que le traitement d'une première commande CMD1 par la carte à puce DV1 est suspendu, le terminal T1 peut envoyer une nouvelle commande APDU pour initier un nouveau traitement (différent du traitement de la commande CMD1) par la carte à puce DV1. De même, la carte à puce DV1 est capable de traiter de façon plus souple et efficace des commandes APDU en mettant en suspens l'exécution d'une première commande CMD1 afin de libérer la liaison série L1 et initier si besoin le traitement d'une nouvelle commande APDU (différente de CMD1) reçue du terminal T1.

L'invention permet ainsi à la carte à puce DV1 de mettre en attente une, voire une pluralité de commandes APDU reçues du terminal T1 (voire de divers terminaux), de sorte à temporiser leur traitement et éventuellement adapter l'ordre d'exécution de ces commandes en fonction par exemple de leur degré de priorité respectif. Le terminal T1 peut ainsi décider de déclencher le traitement d'une nouvelle commande APDU qui est jugée prioritaire par rapport à une première commande CMD1 qui a été mise en suspens, ce qui améliore le contrôle qu'opère le terminal sur les traitements réalisés par la carte à puce DV1.

A noter que des mises en œuvre de l'invention sont possibles, dans lesquelles le terminal T1 ne relance pas en A16 **(****figure 4****)** l'exécution de la commande CMD1 précédemment suspendue mais au contraire met fin définitivement au traitement de cette commande CMD1. Ainsi, après avoir été informé (A12, **figure 4****)** de la suspension du traitement TR1 d'une première commande CMD1 par la carte à puce DV1, le terminal T1 peut décider (après éventuellement un temps d'attente donné) de mettre fin définitivement audit traitement TR1 au niveau de la carte à puce DV1. Bien que l'exécution du traitement TR1 n'aille finalement pas jusqu'à son terme dans ce cas particulier, la suspension du traitement TR1 de la première commande CMD1 aura permis malgré tout de temporiser et de libérer la liaison série L1 de sorte à donner la possibilité au terminal T1 d'initier l'exécution d'une autre commande si nécessaire et de décider par la suite si le traitement TR1 de la première commande CMD1 doit être poursuivi ou non. Cette souplesse accrue améliore le contrôle opéré par le terminal T1 sur la carte à puce DV1 dans la mesure où le terminal T1 est capable de reprendre l'exécution d'une commande APDU suspendue ou au contraire de mettre fin au traitement d'une commande APDU suspendue en fonction du cas d'espèce.

Une variante de réalisation de l'invention est à présent décrite en référence à la **figure 5****.** Plus précisément, la carte à puce DV1 et le terminal T1 représentés en **figures 1-3** mettent en œuvre respectivement un procédé de traitement et un procédé de contrôle en exécutant les programmes d'ordinateur correspondants PG1, PG2. Cette variante diffère du mode de réalisation décrit en référence à la **figure 4** en ce que, au lieu d'envoyer en A16 une commande de reprise d'exécution CMD2, le terminal T1 envoie à la carte à puce DV1 une commande d'abandon causant l'abandon (la fin) du traitement TR1.

Plus précisément, on suppose que le terminal T1 et la carte à puce DV1 ont respectivement exécuté les étapes A2-A14 et B2-B14 comme précédemment décrit en référence à la **figure 4****.** Le traitement TR1 de la commande CMD1 est par conséquent actuellement en suspens.

Au cours d'une étape B30 de réception (**figure 5**), la carte à puce DV1 reçoit une commande d'abandon de type APDU, notée CMD3, qui est envoyée (A30) par le terminal T1 via la liaison série L1. En réponse à cette commande d'abandon CMD3, la carte à puce DV1 abandonne (B32) le traitement TR1 avant son exécution totale et supprime dans ses données de statut DT1 le statut de suspension ST1 associé à l'identifiant ID1 dans sa mémoire 6, de sorte à refléter cet abandon (B32). Lors de cet abandon, la carte à puce DV1 peut supprimer (B32) également de sa mémoire les éventuelles données générées lors de l'exécution partielle du traitement TR1 entre les instants t1 et t2 (**figure 4**) et qui ont été stockées provisoirement par la carte à puce DV1 lors du mécanisme de suspension B7. Cet abandon est alors définitif dans le sens où il n'est pas possible pour la carte à puce DV1 de reprendre ultérieurement l'exécution du traitement TR1 si elle reçoit une commande de reprise d'exécution (le traitement TR1 devra être initié à nouveau depuis le début).

En outre, au cours d'une étape B34 d'envoi (**figure 5**), la carte à puce DV1 envoie au terminal T1 via la liaison série L1 un message d'abandon MSG3 indiquant que le traitement TR1 de la commande CMD1 est abandonné (et donc terminé).

A noter que la commande d'abandon CMD3 envoyée par le terminal T1 peut comporter l'identifiant ID1 pour demander spécifiquement à la carte à puce DV1 d'abandonner le traitement TR1 de la commande CMD1 qui est en suspens. Sur détection de cet identifiant ID1, la carte à puce DV1 abandonne ainsi le traitement TR1 comme indiqué ci-avant.

En variante, la commande d'abandon CMD3 envoyée par le terminal T1 requiert l'abandon de chaque traitement de commande APDU qui est actuellement en suspens au niveau de la carte à puce DV1, de sorte qu'il n'est pas nécessaire d'inclure dans la commande d'abandon CMD3 l'identifiant ID1 (ni aucun autre identifiant de commande). Dans cette variante, en réponse à la commande d'abandon CMD3, la carte à puce DV1 abandonne chaque traitement de commande qui est actuellement en suspens (y compris le traitement TR1 dans cet exemple). La commande d'abandon CMD3 permet ainsi de purger (supprimer) au niveau de la carte à puce DV1 un traitement en suspens particulier d'une commande APDU ou tous traitements en suspens de commandes APDU. Le terminal T1 peut ainsi contrôler de façon souple et efficace le fonctionnement de la carte à puce DV1 au cours du temps.

Au vu de ce qui précède, on comprend que le terminal T1 peut répondre de différentes manières au message de suspension MSG1 reçut en A12 (**figure 4**). En particulier, en réponse au message de suspension MSG1, le terminal T1 peut envoyer l'une quelconque parmi les commandes suivantes :
- une commande de reprise d'exécution CMD2 comportant le premier identifiant ID1 de la première commande CMD1, pour déclencher la reprise de l'exécution du premier traitement TR1 par la carte à puce DV1 (cf. étape A16, **figure 4**) ; et
- une commande d'abandon comportant le premier identifiant ID1 de la première commande CMD1, pour mettre fin au premier traitement TR1 par la carte à puce DV1 avant son exécution totale (cf. étape A30, **figure 5**).

En variante, en réponse au message de suspension MSG1, le terminal T1 peut envoyer une requête de statut (commande d'audit) de sorte que la carte à puce DV1 indique au terminal T1 la ou les commandes actuellement en suspens dans la carte à puce DV1. Dans cet exemple particulier, en réponse à une telle requête de statut, la carte à puce DV1 informe alors le terminal T1 que le traitement de la commande CMD1 est en suspens.

Par ailleurs, pendant que le traitement TR1 de la première commande CMD1 est suspendu, diverses commandes APDU peuvent être envoyées par le terminal T1 pour gérer le fonctionnement de la carte à puce DV1. Des exemples de telles commandes sont décrits ci-après. En particulier, pendant que le traitement TR1 de la commande CMD1 est suspendu, le terminal T1 peut envoyer une commande APDU classique quelconque (READ RECORD, READ BINARY, ...) pour déclencher un nouveau traitement au niveau de la carte à puce DV1.

Selon un exemple particulier, suite à la réception (A12, **figure 4**) du message de suspension MSG1 et avant l'envoi d'une commande de reprise d'exécution CMD2 (A16, **figure 4**) ou d'une commande d'abandon CMD3 (A30, **figure 5**), le terminal T1 envoie au moins l'un parmi les éléments suivant à la carte à puce DV1 :
- une deuxième commande APDU pour initier l'exécution d'un deuxième traitement de la deuxième commande APDU par la carte à puce DV1 alors que le premier traitement TR1 de la première commande APDU est couramment suspendu ; et
- une requête de statut requérant à la carte à puce DV1 d'indiquer par retour chaque traitement de commande APDU couramment en suspens.

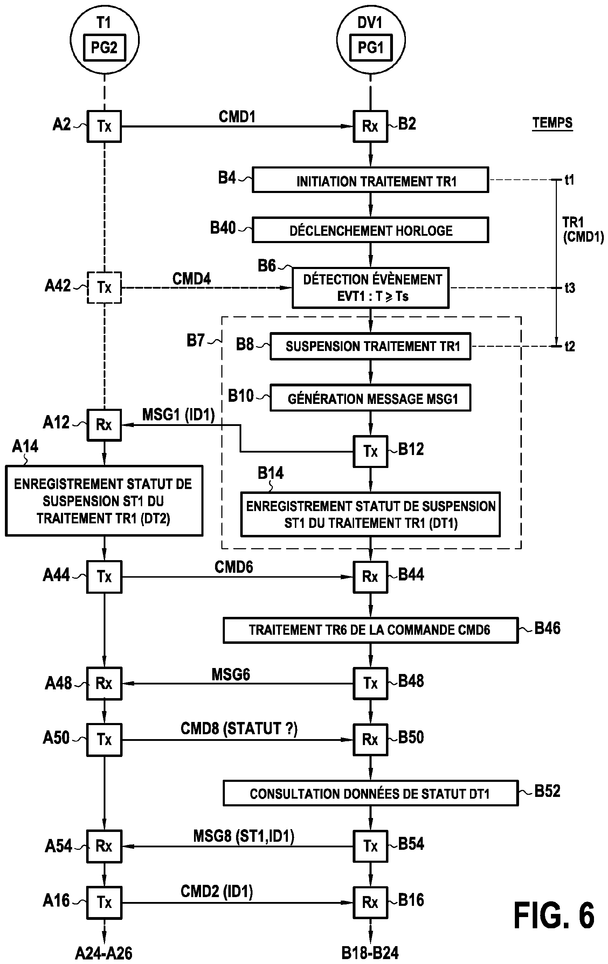

Le recours à une telle requête de statut est décrit plus en détail ci-après dans un exemple particulier en référence à la **figure 6****.**

Un mode de réalisation particulier de l'invention est à présent décrit en référence à la **figure 6****.** Plus précisément, la carte à puce DV1 et le terminal T1 représentés en **figures 1-3** mettent en œuvre respectivement un procédé de traitement et un procédé de contrôle en exécutant les programmes d'ordinateur correspondants PG1, PG2.

Plus précisément, on suppose que le terminal T1 et la carte à puce DV1 ont respectivement exécuté l'étape A2 et les étapes B2-B4 comme précédemment décrit en référence à la **figure 4****.** Sur détection que le traitement TR1 de la commande CMD1 est initié, la carte à puce DV1 déclenche (B40) en outre un compteur de temps (une horloge) qui mesure le temps t écoulé à compter de l'instant t1.

On suppose ensuite que la carte à puce DV1 détecte un évènement EVT1 au cours d'une étape B6 de détection comme précédemment décrit. Dans ce cas particulier, la carte à puce DV1 détecte par exemple en tant qu'événement EVT1 le fait que le temps t écoulé, à compter de l'instant t1 jusqu'à un instant courant t3, a atteint (ou est supérieur ou égale) une durée prédéfinie Ts (par exemple Ts = 2 secondes). En variante, la carte à puce DV1 détecte en tant qu'événement EVT1 la réception (B6) d'une commande de suspension CMD4 émise par le terminal T1 (A42) selon le protocole HCI via la liaison série L1.

Le terminal T1 et la carte à puce DV1 exécutent ensuite respectivement les étapes A12-A14 et B7-B14 comme précédemment décrit en référence à la **figure 4****.** Ainsi, lors du mécanisme de suspension B7 déclenché sur détection de l'événement EVT1, la carte à puce DV1 suspend (B8) le traitement TR1 de la commande CMD1, génère (B10) un message de suspension APDU noté MSG1 qu'elle envoie (B12) au terminal T1, via la liaison L1, pour l'informer de la suspension du traitement TR1 et met à jour (B14) ses données de statut DT1 en conséquence. Le terminal T1 reçoit le message de suspension MSG1 au cours d'une étape de réception A12 et met à jour (A14) ses données de statut DT2 en conséquence.

Une fois que le traitement TR1 de la commande CMD1 est suspendu, on suppose que le terminal T1 envoie (A44) une nouvelle commande CMD6 pour initier un nouveau traitement TR6 par la carte à puce DV1. En réponse à cette commande CMD6 reçue en B44, la carte à puce DV1 initie (B46) le traitement TR6 tandis que le traitement TR1 reste en suspens. On suppose dans cet exemple que la commande CMD6 (respectivement le traitement TR6) est différente de la commande CMD1 (respectivement du traitement TR1).

Au cours d'une étape B48 d'envoi, la carte à puce DV1 détecte que le traitement TR6 est achevé et envoie un message de statut MSG6 (de type APDU) au terminal T1 via la liaison série L1 pour indiquer audit terminal T1 que la commande CMD6 a été totalement exécutée. Le terminal T1 reçoit ledit message de statut MSG6 au cours d'une étape de réception A48.

Dans cet exemple, on suppose ensuite que le terminal T1 envoie (A50) une requête de statut CMD8 à la carte à puce DV1 pour obtenir un statut sur la ou les commandes APDU actuellement mises en suspend au niveau de la carte à puce DV1. Autrement dit, cette requête de statut (ou commande d'audit) requiert à la carte à puce DV1 d'indiquer au terminal T1 chaque traitement de commande APDU couramment en suspens. Cette requête de statut CMD8 est une nouvelle commande APDU conforme à l'invention.

La carte à puce DV1 reçoit cette requête de statut CMD8 en B50, alors que le traitement TR1 de la première commande APDU est couramment suspendu. Au cours d'une étape B52 de consultation, la carte à puce DV1 consulte les données de statut DT1 dans sa mémoire 6 et détermine que le traitement TR1 de la commande CMD1 est actuellement suspendu.

Suite à l'étape B52 de consultation, la carte à puce DV1 envoie (B54) au terminal T1, en réponse à la requête de statut CMD8, un message de statut MSG8 (de type APDU) via la liaison série L1. Ce message de statut MSG8 comprend un statut de suspension ST1 en association avec le premier identifiant ID1 pour indiquer que le traitement TR1 de la commande CMD1 est actuellement en suspens.

Le terminal T1 reçoit le message de statut MSG8 au cours d'une étape de réception A54 et en déduit que le traitement de la première commande CMD1 n'a pas été achevé et est actuellement en suspens. En réponse à ce message de statut MSG8, le terminal T1 envoie ainsi une commande de reprise d'exécution CMD2 comportant l'identifiant ID1 lors d'une étape d'envoi A16, comme déjà décrit en référence à la **figure 4****.** Ainsi, le terminal T1 et la carte à puce DV1 exécutent les étapes A16-A26 et B16-24 comme déjà décrit précédemment.

L'envoi d'une requête de statut CMD8 permet donc au terminal T1 d'interroger la carte à puce DV1 pour déterminer à un instant donné la ou les commandes APDU dont le traitement est couramment en suspens au niveau de la carte à puce DV1. Dans le cas particulier où le terminal T1 a précédemment enregistré le statut de suspension ST1 en association avec l'identifiant ID1 lors de l'étape A14, cela permet de comparer les données du message de statut MSG8 de la carte à puce DV1 avec les données de statut DT2 pour vérifier que ces dernières sont bien à jour.

L'usage d'une telle requête de statut CMD8 permet éventuellement au terminal T1 de s'affranchir de l'étape A14 d'enregistrement **(****figure 4****)** puisqu'au lieu d'enregistrer le statut de suspension ST1 en association avec l'identifiant ID1 (A14), le terminal T1 peut demander ponctuellement à la carte à puce DV1 la ou les commandes actuellement en suspens au niveau de la carte.

Selon un exemple particulier, alors qu'au moins le premier traitement TR1 de la première commande CMD1 est couramment suspendu, la carte à puce DV1 :
- reçoit une requête de statut CMD8 (APDU) en provenance du terminal T1 ; et
- en réponse à cette requête de statut, envoie au terminal T1 d'un message de statut MSG8 (APDU) comportant un statut de suspension ST1 en association avec le premier identifiant ID1 pour indiquer que la première commande CMD1 est actuellement suspendue.

Selon un exemple particulier, la requête de statut CMD8 envoyée par le terminal T1 comprend l'identifiant ID1 de la première commande CMD1 pour demander spécifiquement à la carte à puce DV1 le statut courant de la commande CMD1. En variante, la carte à puce DV1 indique dans son message de statut MSG8 chaque commande APDU actuellement en suspens, de sorte que la présence de l'identifiant ID1 dans la requête de statut CMD8 n'est pas nécessaire.

Selon un exemple particulier, alors que des traitements d'une pluralité de commandes APDU y compris ledit premier traitement TR1 sont couramment suspendus, la carte à puce DV1 :
- reçoit une requête de statut CMD8 en provenance du terminal T1 ; et
- en réponse à cette requête de statut, envoie au terminal T1 un message de statut MSG8 comportant un statut de suspension ST en association avec au moins deux identifiants ID (y compris ID1) pour indiquer qu'au moins deux commandes ADPU (y compris CMD1) sont actuellement en suspens.

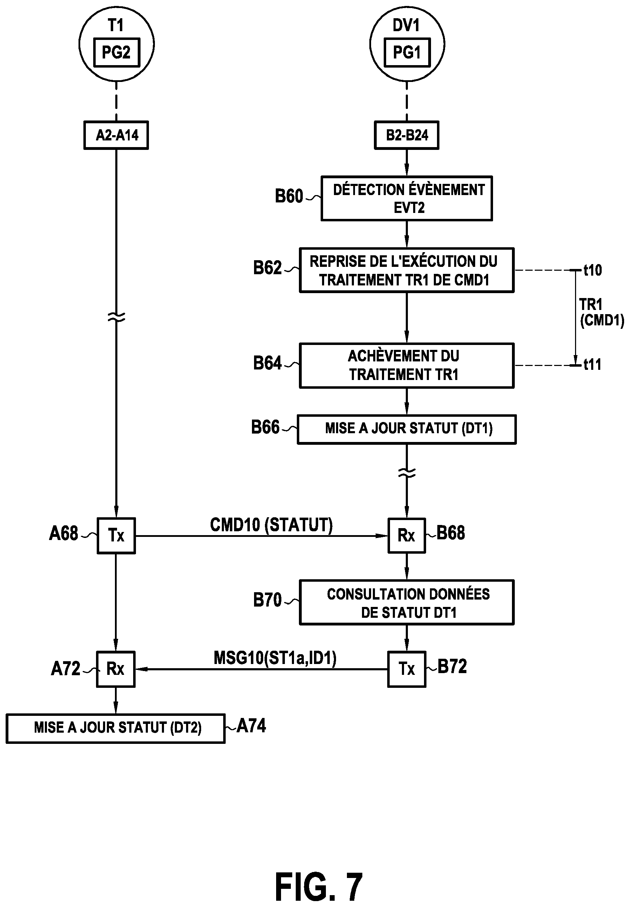

Un mode de réalisation de l'invention est à présent décrit en référence à la **figure 7****.** Plus précisément, la carte à puce DV1 et le terminal T1 représentés en **figures 1-3** mettent en œuvre respectivement un procédé de traitement et un procédé de contrôle en exécutant les programmes d'ordinateur correspondants PG1, PG2. Cette variante diffère du mode de réalisation décrit en référence à la **figure 4** en ce que la carte à puce DV1 prend elle-même l'initiative de relancer l'exécution du traitement TR1 de la commande CMD1 sans que la reprise d'exécution ne soit sollicitée par le terminal T1 (c.-à-d. indépendamment d'une quelconque commande reçue du terminal T1).

Plus précisément, on suppose que le terminal T1 et la carte à puce DV1 ont respectivement exécuté les étapes A2-A14 et B2-B14 comme précédemment décrit en référence à la **figure 4****.** Le traitement TR1 de la commande CMD1 est par conséquent actuellement en suspens.

Au cours d'une étape B60 (**figure 7**), la carte à puce DV1 détecte un deuxième évènement EVT2. Selon un exemple particulier, ce deuxième évènement EVT2 comprend au moins une détection qu'aucune commande ADPU n'est en cours de traitement par la carte à puce DV1. D'autres critères peuvent également être pris en compte par la carte à puce DV1.

En réponse à la détection B60 de l'évènement EVT2, la carte à puce DV1 déclenche (B62) la reprise de l'exécution du traitement TR1 de la commande CMD1 sans que cette reprise d'exécution ne soit sollicitée par le terminal T1 (c.-à-d. indépendamment d'une quelconque commande de reprise d'exécution provenant du terminal T1). Dans cet exemple, le traitement TR1 reprend ainsi à l'instant t10.

On suppose ensuite que la carte à puce DV1 détecte en B64 (**figure 7**) l'achèvement du traitement TR1 à l'instant t11. Sur détection (B64) que le traitement TR1 est achevé, la carte à puce DV1 met à jour (B66) les données de statut DT1 dans sa mémoire pour indiquer que la commande CMD1 n'est plus en suspens, par exemple en supprimant le statut de suspension ST1 associé à l'identifiant ID1 de la première commande CMD1. En variante, cette mise à jour est réalisée dès que le traitement TR1 de la commande CMD1 a repris en B62.

Ce mode de réalisation permet notamment à la carte à puce DV1 de suspendre le traitement d'une commande CMD1 lorsque cela est nécessaire puis de relancer celui-ci de sa propre initiative lorsque la situation le permet, afin de donner encore plus de souplesse et de réactivité au fonctionnement de la carte à puce DV1. Le traitement des commandes APDU peut ainsi être réalisé de façon accélérée tout en offrant de la souplesse dans le cas où l'ordre d'exécution de commandes APDU doit être adapté.

Toujours dans le mode de réalisation de la **figure 7**, on suppose que la carte à puce DV1 attend une requête de statut provenant du terminal T1 pour lui indiquer qu'elle a poursuivi et achevé le traitement TR1 de la première commande CMD1.

Plus précisément, suite à la mise à jour B66, on suppose que la carte à puce DV1 reçoit (B68) une requête de statut CMD10 envoyée par le terminal T1 lors d'une étape d'envoi A68 via la liaison série L1. En réponse à la requête de statut CMD10, la carte à puce DV1 consulte (B70) les données de statut DT1 dans sa mémoire et en déduit que le traitement TR1 de la commande CMD1 est achevé. Aussi, en réponse à la requête de statut CMD10, la carte à puce DV1 envoie (B72) un message de statut MSG10 indiquant que le traitement TR1 est achevé. Pour ce faire, le message de statut MSG10 comprend par exemple un statut d'exécution totale ST1a en association avec le premier identifiant ID1 pour indiquer l'exécution totale (l'achèvement) du premier traitement TR1. En variante, le message de statut MSG10 ne comprend aucun statut en association avec l'identifiant ID1 pour indiquer que le traitement TR1 est à présent achevé.

Le terminal T1 reçoit le message de statut MSG10 au cours d'une étape A72, et déduit à partir de ce message que la commande CMD1 a déjà été totalement exécutée par la carte à puce DV1 de sorte qu'il n'est pas nécessaire de relancer son exécution suite à la mise en œuvre du mécanisme de suspension. Selon un exemple particulier, le terminal T1 peut en outre mettre à jour (A74) ses données de statut DT2 de façon analogue à l'étape A26 **(****figure 4****)** pour refléter le fait que le traitement TR1 est à présent achevé.

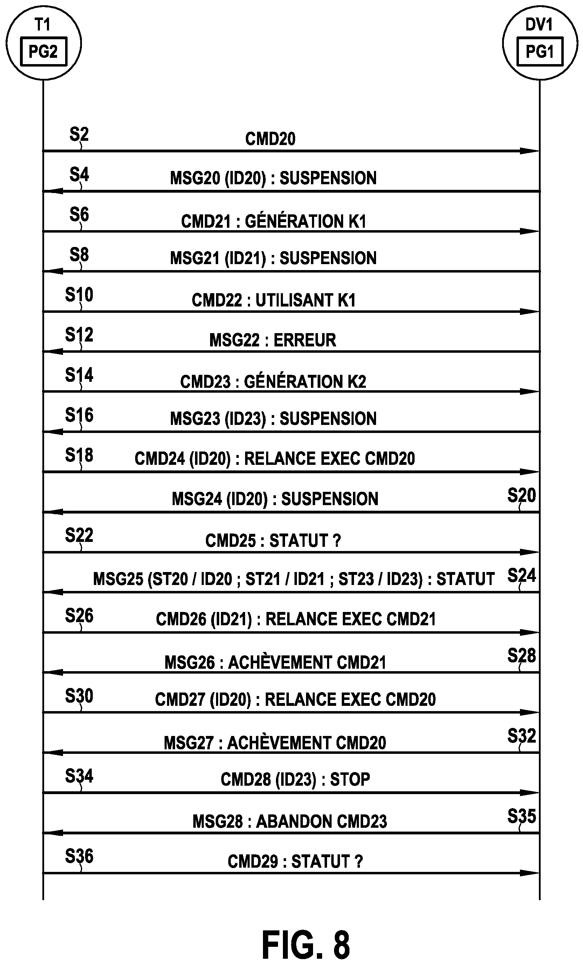

Un mode de réalisation de l'invention est à présent décrit en référence à la **figure 8****.** Plus précisément, la carte à puce DV1 et le terminal T1 représentés en **figures 1-3** mettent en œuvre respectivement un procédé de traitement et un procédé de contrôle en exécutant les programmes d'ordinateur correspondants PG1, PG2. Dans cet exemple, le concept de l'invention est mis en œuvre pour suspendre plusieurs commandes APDU et pour adapter le contrôle du terminal T1 sur la carte à puce DV1, de façon analogue à ce qui a été décrit ci-avant. Pour ce faire, le terminal T1 et la carte à puce DV1 échangent des ADPUs via la liaison série L1 comme décrit ci-dessous. Certains détails d'implémentation ne sont donc pas répétés ici par souci de simplicité.

Plus précisément, au cours d'une étape d'envoi S2, le terminal T1 envoie une première commande ADPU notée CMD20 à la carte à puce DV1 pour initier l'exécution d'un premier traitement. On suppose que la carte à puce DV1 commence à exécuter un traitement en réponse à la commande CMD20 puis déclenche le mécanisme de suspension pour suspendre le traitement de la commande CDM20 avant son exécution complète. La carte à puce DV1 envoie (S4) ainsi un message de suspension MSG20 comportant un identifiant ID20 de la commande CMD20.

Le terminal T1 envoie (S6) alors une deuxième commande APDU notée CMD21 à la carte à puce DV1 pour initier l'exécution d'un deuxième traitement. Dans cet exemple, la commande CMD21 requiert la génération d'une clé cryptographique K1. On suppose que la carte à puce DV1 commence à exécuter un traitement en réponse à la commande CMD21 pour générer la clé cryptographique K1 puis déclenche le mécanisme de suspension pour suspendre le traitement de la deuxième commande CDM21 avant son exécution complète. La carte à puce DV1 envoie (S8) ainsi un message de suspension MSG21 comportant un identifiant ID21 de la deuxième commande CMD21.

On suppose à présent que le terminal T1 envoie (S10) une nouvelle commande ADPU notée CMD22 qui utilise la clé cryptographique K1. En réponse, la carte à puce DV1 envoie (S12) un message d'erreur MSG22 indiquant qu'elle ne peut pas traiter cette commande CMD22 puisque le traitement de la deuxième commande CMD21 n'est pas achevé (la clé K1 n'est donc pas encore générée).

Le terminal T1 envoie (S14) alors une troisième commande APDU notée CMD23 à la carte à puce DV1 pour initier l'exécution d'un troisième traitement. Dans cet exemple, la commande CMD23 requiert la génération d'une deuxième clé cryptographique K2. On suppose que la carte à puce DV1 commence à exécuter un traitement en réponse à la commande CMD23 pour générer la clé cryptographique K2 puis déclenche le mécanisme de suspension pour suspendre le traitement de la troisième commande CDM23 avant son exécution complète. La carte à puce DV1 envoie (S16) ainsi un message de suspension MSG23 comportant un identifiant ID23 de la troisième commande CMD23.

On suppose ensuite que le terminal T1 envoie (S18) une commande de relance d'exécution CMD24 comportant l'identifiant ID20 de la première commande CMD20 pour causer la reprise de l'exécution du traitement de la commande CMD20. En réponse, la carte à puce DV1 reprend l'exécution du traitement de la première commande CDM20 et déclenche ultérieurement le mécanisme de suspension pour suspendre à nouveau le traitement de la première commande CDM20 avant son exécution complète. La carte à puce DV1 envoie (S20) ainsi un nouveau message de suspension MSG24 comportant l'identifiant ID20 de la première commande CMD20.

Le terminal T1 envoie (S22) ensuit une requête de statut CMD25 pour demander quelles commandes APDU sont actuellement en suspens au niveau de la carte à puce DV1. En réponse, la carte à puce DV1 envoie (S24) un message de statut MSG25 comportant les identifiants ID20, ID21 et ID23 associés respectivement à des statuts de suspension ST20, ST21 et ST23 pour indiquer que le traitement de chacune des commandes CMD20, CMD21 et CMD23 est actuellement en suspens.

Au cours d'une étape S26 d'envoi, le terminal T1 envoie ici une commande de relance d'exécution CMD26 comportant l'identifiant ID21 de la deuxième commande CMD21 pour requérir la reprise de l'exécution de cette commande CMD21. En réponse, la carte à puce DV1 reprend l'exécution du traitement de la deuxième commande CMD21 jusqu'à son achèvement. La carte à puce DV1 envoie (S28) ensuite un message de statut MSG26 pour indiquer que la deuxième commande CMD21 a été complètement exécutée (par exemple, génération complète d'un clé K1 en mémoire de la carte à puce DV1).

On suppose ensuite que le terminal T1 envoie (S30) une nouvelle commande de relance d'exécution CMD27 comportant cette fois l'identifiant ID20 de la première commande CMD20 pour requérir la reprise de l'exécution de cette commande CMD20. En réponse, la carte à puce DV1 reprend l'exécution du traitement de la première commande CMD20 jusqu'à son achèvement. La carte à puce DV1 envoie (S32) ensuite un message de statut MSG27 pour indiquer que la première commande CMD20 a été complètement exécutée et éventuellement pour transmettre au terminal T1 des données liées à (ou résultant de) l'exécution complète de la commande CMD20.

Dans cet exemple, le terminal T1 détecte ensuite que le traitement de la troisième commande CMD23 doit être abandonné et envoie (S34) donc une commande d'abandon CMD28 comportant l'identifiant ID23 pour requérir à la carte à puce DV1 l'abandon du traitement de la commande CMD23 qui était jusqu'ici en suspens. En réponse, la carte à puce DV1 abandonne le traitement de la troisième commande CMD23 et envoie (S35) ensuite un message de statut MSG28 pour indiquer que le traitement de la troisième commande CMD23 a été abandonné. Ce message de statut MSG28 permet à la carte à puce DV1 d'indiquer au terminal T1 que la commande d'abandon CMD28 a bien été prise en compte et exécutée.

Le terminal T1 peut ensuite éventuellement envoyer (S36) à la carte à puce DV1 une requête de statut CMD29 afin de vérifier l'état courant des commandes APDU précédemment envoyées.

Comme décrit ci-avant, l'invention permet ainsi au terminal T1 d'adapter dynamiquement la séquence de traitement de commandes APDU exécutée par la carte à puce DV1 dans le temps en fonction des besoins et des priorités. Le terminal T1 peut causer la suspension, la reprise ou l'abandon d'une demande APDU, ou encore demander d'identifier les commandes actuellement en suspens ou purger toutes les commandes actuellement en suspens. La carte à puce DV1 peut ainsi traiter une pluralité de commandes APDU séquentiellement suivant un ordre d'exécution adaptable, sur le principe de tâches d'exécution qui peuvent être suspendues puis relancées (selon un ordre variable) ou abandonnées selon le cas.

Comme décrit précédemment, selon un exemple particulier, le terminal T1 (**figures 1-2**) peut être configuré pour envoyer à la carte à puce DV1 via la liaison série L1 une ou des commandes CMD de type APDU selon un protocole de communication autre que le protocole ISO 7816. En particulier, le terminal T1 peut par exemple envoyer à la carte à puce DV1 au moins une commande via la liaison série L1 selon le protocole HCI (pour « Host Controller Interface »), ce qui permet au terminal T1 d'envoyer des instructions à la carte à puce DV1 même si le canal protocolaire dédié aux APDUs est bloqué (car en attente d'une réponse de la carte à puce DV1).

Ainsi, la carte à puce DV1 peut comprendre plusieurs interfaces aptes à communiquer suivant différents protocoles avec l'extérieur, à savoir : une interface (ou ligne) ISO permettant de communiquer par contact selon le protocole ISO 7816 avec le terminal T1 et une interface SWP (pour « Single Wire Protocol ») permettant de communiquer en sans contact selon le protocole SWP avec le terminal T1. Dans le cas particulier où le protocole SWP est utilisé, l'entrée SWP de la carte à puce DV1 peut recevoir des commandes APDU, notées SWP[HCI[APDU]], encapsulées dans le protocole HCI, qui est lui-même encapsulé dans le protocole SWP. Toutefois, comme déjà indiqué, étant donné que la carte à puce DV1 n'est généralement pas capable de traiter deux commandes du terminal T1 en même temps (pas de multi-fils d'exécution (« multithread ») en parallèle), la carte ne peut pas initier le traitement d'une commande SWP[HCl[APDU]] tant qu'une commande classique APDU (ISO) est en cours de traitement dans la carte à puce DV1 (et inversement).

Ainsi, si un premier traitement d'une première commande APDU reçue depuis le terminal T1 via l'interface ISO est en cours de traitement au niveau de la carte à puce DV1, toute deuxième commande SWP[HCl[APDU]] reçue via l'interface SWP selon le protocole SWP ne peut normalement être traitée par la carte à puce DV1 qu'une fois que le premier traitement de la première commande APDU (ISO) est terminé (et inversement). La suspension du traitement au niveau de la carte à puce DV1 d'une commande APDU précédemment reçue sur la ligne ISO permet à la carte à puce DV1 de prendre en charge plus rapidement une autre commande APDU qui nécessite d'être traitée en priorité, telle qu'une autre commande APDU reçue via l'interface ISO ou une autre commande APDU reçue via l'interface SWP. Il est ainsi possible pour la carte à puce DV1 de traiter plus efficacement des commandes APDU reçues via différentes interfaces (différents protocoles), dans la mesure où le traitement d'une commande APDU reçue via une première interface peut être déclenché sans attendre nécessairement la fin du traitement lié à une ou des commandes APDU reçues via une autre interface. La carte à puce DV1 peut par exemple suspendre le traitement d'une commande APDU reçue via l'interface ISO pour traiter une autre commande APDU reçue via l'interface SWP ou, inversement, suspendre le traitement d'une commande APDU reçue via l'interface SWP pour traiter une autre commande ADPU reçue vis l'interface ISO.

A noter que l'ordre dans lequel s'enchaînent les étapes des procédés tels que décrits précédemment en référence aux **figures 4-8** ne constitue que des exemples de réalisation, des variantes étant possibles.

Comme le comprend l'homme du métier, les modes de réalisation et variantes décrits ci-avant ne constituent que des exemples non limitatifs de mise en œuvre de l'invention. En particulier, l'homme du métier peut envisager une quelconque adaptation ou combinaison des modes de réalisation et variantes décrits ci-avant, conformément aux revendications qui suivent, afin de répondre à un besoin bien particulier.

## Revendications

1. Procédé de traitement mis en œuvre par un dispositif électronique (DV1) opérant sous le contrôle d'un terminal (T1) pour traiter une transaction en coopérant via une liaison série avec ledit terminal, ledit procédé comprenant :
- réception (B2) d'une première commande APDU (CMD1) provenant du terminal ;
- initiation (B4) d'un premier traitement (TR1) de la première commande APDU ;
- sur détection d'au moins un premier événement (EVT1), exécution (B7) d'un mécanisme de suspension comprenant :
∘ suspension (B8) du premier traitement de la première commande APDU avant achèvement dudit premier traitement ; et
∘ envoi (B12) au terminal d'un message de suspension (MSG1) indiquant ladite suspension du premier traitement, ledit message de suspension comprenant un premier identifiant (ID1) de ladite première commande APDU ;
- réception, en provenance du terminal (T1), d'au moins une nouvelle commande APDU causant l'exécution par le dispositif électronique d'au moins un traitement correspondant pendant que le premier traitement de la première commande APDU est en suspens ;
- après la suspension du premier traitement, si une commande de reprise d'exécution comportant le premier identifiant de la première commande APDU est reçue (B16) en provenance du terminal, reprise (B18) de l'exécution du premier traitement de la première commande APDU.

2. Procédé selon la revendication 1, dans lequel ledit au moins un premier événement (EVT1) comprend au moins l'un parmi :
- expiration d'une durée prédéfinie allouée pour l'exécution du premier traitement ;
- réception, en provenance du terminal, d'une commande de suspension requérant la suspension du premier traitement ;
- détection que la première commande APDU est d'un type prédéfini ;
- réception, en provenance d'une unité de mesure interne ou externe au dispositif électronique, de données prédéfinies.

3. Procédé selon la revendication 1 ou 2, dans lequel le mécanisme de suspension (B7) comprend :
- déclenchement (B40) d'un compteur de temps à compter de l'initiation dudit premier traitement ; et
- sur détection, en tant que premier événement, qu'une durée prédéfinie a expiré selon le compteur de temps, déclenchement (B8) de ladite suspension du premier traitement de la première commande APDU et de l'envoi (B12) au terminal du message de suspension.

4. Procédé selon l'une quelconque des revendications 1 à 3, dans lequel le mécanisme de suspension comprend en outre, sur détection dudit premier événement :
- génération du premier identifiant de la première commande APDU ; et
- insertion dudit premier identifiant dans le message de suspension avant ledit envoi au terminal.

5. Procédé selon l'une quelconque des revendications 1 à 4, dans lequel le mécanisme de suspension comprend en outre, sur détection dudit au moins un premier événement :
- enregistrement (B14) dans une mémoire du dispositif électronique d'un statut de suspension (ST1) en association avec ledit premier identifiant (ID1), ledit statut de suspension spécifiant que le premier traitement est couramment suspendu.

6. Procédé selon la revendication 5, dans lequel le procédé comprend :
- si une commande d'abandon comportant le premier identifiant de la première commande ADPU est reçue alors que le premier traitement de la première commande APDU est couramment suspendu, suppression (B32) dans ladite mémoire du statut de suspension associé au premier identifiant pour mettre fin au premier traitement avant son exécution totale.

7. Procédé selon l'une quelconque des revendications 1 à 6, dans lequel le procédé comprend en outre, alors que le premier traitement de la première commande APDU est couramment suspendu :
- réception (B44) d'une deuxième commande APDU (CMD6) provenant du terminal ; et
- en réponse à ladite deuxième commande APDU, initiation (B46) d'un deuxième traitement (TR6) de la deuxième commande APDU.

8. Procédé selon l'une quelconque des revendications 1 à 7, dans lequel le procédé comprend, alors qu'au moins ledit premier traitement de la première commande APDU est couramment suspendu :
- réception en provenance du terminal d'une requête de statut (CMD8) ; et
- en réponse à ladite requête de statut, envoi (MSG8) au terminal d'un message de statut comportant un statut de suspension (ST1) en association avec ledit premier identifiant (ID1) pour indiquer que la première commande ADPU est actuellement suspendue.

9. Procédé selon l'une quelconque des revendications 1 à 8, dans lequel le procédé comprend en outre, alors que le premier traitement de la première commande APDU est couramment suspendu :
- détection (B60) d'au moins un deuxième événement (EVT2) comprenant une détection qu'aucune commande ADPU n'est en cours de traitement par ledit dispositif électronique ; et
- en réponse audit au moins un deuxième événement, reprise (B62) de l'exécution du premier traitement (TR1) de la première commande APDU (CMD1) indépendamment d'une quelconque commande reçue du terminal.

10. Procédé selon la revendication 9, dans lequel le procédé comprend, suite à la reprise de l'exécution du premier traitement indépendamment d'une quelconque commande reçue du terminal :
- détection que le premier traitement de la première commande ADPU est totalement exécuté ; puis
- enregistrement dans une mémoire du dispositif électronique d'un statut d'exécution totale en association avec ledit premier identifiant, pour spécifier que le premier traitement a été totalement exécuté ;
- réception en provenance du terminal d'une requête de statut ; et
- en réponse à ladite requête de statut, envoi au terminal d'un message de statut comportant le statut d'exécution totale en association avec ledit premier identifiant pour indiquer l'exécution totale du premier traitement.

11. Procédé selon l'une quelconque des revendications 1 à 10, dans lequel le dispositif électronique et le terminal coopère selon le protocole APDU.

12. Procédé de contrôle mis en œuvre par un terminal (T1) contrôlant un dispositif électronique (DV1) pour traiter une transaction en coopérant via une liaison série avec ledit dispositif électronique, ledit procédé comprenant :
- envoi (A2) au dispositif électronique d'une première commande APDU (CMD1) pour initier l'exécution d'un premier traitement de la première commande APDU par le dispositif électronique ;
- réception (A12) en provenance du dispositif électronique d'un message de suspension (MSG1) indiquant la suspension du premier traitement, ledit message de suspension comprenant un premier identifiant (ID1) de ladite première commande APDU ;
- après la réception du message de suspension, envoi au dispositif électronique d'au moins l'une parmi :
∘ une commande de reprise d'exécution (CMD2) comportant le premier identifiant (ID1) de la première commande APDU, pour déclencher la reprise de l'exécution du premier traitement par le dispositif électronique ; et
∘ une commande d'abandon (CMD3) comportant le premier identifiant (ID1) de la première commande ADPU, pour mettre fin au premier traitement par le dispositif électronique avant son exécution totale.

13. Procédé selon la revendication 12, dans lequel le procédé comprend en outre, suite à la réception du message de suspension et avant l'envoi d'une commande de reprise d'exécution ou d'une commande d'abandon, au moins l'un parmi :
- envoi d'une deuxième commande APDU au dispositif électronique pour initier l'exécution d'un deuxième traitement de la deuxième commande APDU par le dispositif électronique alors que le premier traitement de la première commande APDU est couramment suspendu ; et
- envoi au dispositif électronique d'une requête de statut requérant au dispositif électronique d'indiquer par retour chaque traitement de commande APDU couramment en suspens.

14. Dispositif électronique (DV1) apte à opérer sous le contrôle d'un terminal pour traiter une transaction en coopérant via une liaison série avec ledit terminal, comprenant :
- un module de réception configuré pour recevoir une première commande APDU provenant du terminal ;
- un module d'exécution configuré pour initier un premier traitement de la première commande APDU ;
- un module de contrôle configuré, sur détection d'au moins un premier événement, pour exécuter un mécanisme de suspension causant :
∘ suspension du premier traitement de la première commande APDU par le module d'exécution avant achèvement dudit premier traitement ; et
∘ envoi au terminal, par un module d'envoi du dispositif électronique, d'un message de suspension indiquant ladite suspension du premier traitement, ledit message de suspension comprenant un premier identifiant de ladite première commande APDU ;
- le module d'exécution étant configuré, après la suspension du premier traitement, pour reprendre l'exécution du premier traitement de la première commande APDU si une commande de reprise d'exécution comportant le premier identifiant de la première commande APDU est reçue en provenance du terminal.

15. Terminal (T1) apte à contrôler un dispositif électronique pour traiter une transaction en coopérant via une liaison série avec ledit dispositif électronique, comprenant :
- un module d'envoi configuré pour envoyer au dispositif électronique une première commande APDU pour initier l'exécution d'un premier traitement de la première commande APDU par le dispositif électronique ;
- un module de réception configuré pour recevoir, en provenance du dispositif électronique, un message de suspension indiquant la suspension du premier traitement, ledit message de suspension comprenant un premier identifiant de ladite première commande APDU ;
- ledit module d'envoi étant configuré pour envoyer, après la réception du message de suspension par le module de réception, au moins l'une parmi :
∘ une commande de reprise d'exécution comportant le premier identifiant de la première commande APDU, pour déclencher la reprise de l'exécution du premier traitement par le dispositif électronique ; et
∘ une commande d'abandon comportant le premier identifiant de la première commande ADPU, pour mettre fin au premier traitement par le dispositif électronique avant son exécution totale. |
